# EUROPÄISCHE PATENTSCHRIFT

(11) **EP 3 615 264 B1**
(45) Veröffentlichungstag und Bekanntmachung des Hinweises auf die Patenterteilung: **08.07.2020**
(21) Anmeldenummer: 18727282.8
(22) Anmeldetag: 24.05.2018
(51) Int. Cl.: B23P 9/04, C21D 7/04

(54) **VERFAHREN UND VORRICHTUNG ZUM SCHLAGVERFESTIGEN VON ÜBERGANGSRADIEN EINER KURBELWELLE**
METHOD AND DEVICE FOR THE IMPACT TREATMENT OF TRANSITION RADII OF A CRANKSHAFT
PROCÉDÉ ET DISPOSITIF DE TRAITEMENT PAR IMPACT DE RAYONS DE TRANSITION D'UN VILEBREQUIN

(30) Priorität: 14.06.2017 DE 102017113078
(43) Veröffentlichungstag der Anmeldung: 04.03.2020
(73) Patentinhaber: Maschinenfabrik Alfing Kessler GmbH, 73433 Aalen (DE)
(72) Erfinder: REEB, Alfons, 73434 Aalen (DE); SCHMIDT, Jochen, 73560 Boebingen a. d. Rems (DE); GRIMM, Konrad, 73433 Aalen (DE)
(74) Vertreter: Lorenz, Markus
(86) Internationale Anmeldenummer: PCT/EP2018/063698
(87) Internationale Veröffentlichungsnummer: WO 2018/228799

(56) Entgegenhaltungen:
- DE-A1-102006 058 710

## Beschreibung

Die Erfindung betrifft eine Vorrichtung zum Schlagverfestigen von Übergangsradien einer Kurbelwelle, insbesondere von Übergangsradien zwischen Pleuellagerzapfen und Kurbelwangen und/oder Übergangsradien zwischen Hauptlagerzapfen und den Kurbelwangen der Kurbelwelle nach dem Oberbegriff von Anspruch 1.

Die Erfindung betrifft auch ein Verfahren zum Schlagverfestigen von Übergangsradien einer Kurbelwelle. Aufgrund der stetig fortschreitenden Entwicklung und Leistungssteigerung von Brennkraftmaschinen und an diese gestellte Emissionsforderungen werden heutige Motoren in Folge immer stärker beansprucht. Aus diesem Grund stellt die Motorenindustrie unter anderem an die hochbelastete und für die Funktion einer Brennkraftmaschine wichtige Kurbelwelle hohe Anforderungen hinsichtlich der Festigkeit. Konstruktiv besteht dabei häufig die Anforderung, dass die Kurbelwelle leicht und der Platzbedarf gering sein soll. Für die Auslegung der Kurbelwelle bedeutet dies, dass eine Erhöhung der Beanspruchbarkeit nicht über die Erhöhung des Querschnitts, also über das Widerstandsmoment der Kurbelwelle, sondern möglichst über lokale Druckeigenspannungszustände erzielt werden sollte. Aus diesem Grund werden moderne Kurbelwellen unter Verwendung der verschiedensten Bearbeitungs- und Wärmebehandlungsverfahren hergestellt, so dass die Kurbelwellen immer höheren Motorleistungen ausgesetzt werden können.

Beispiele für solche Verfahren sind thermische Behandlungen, wie die Oberflächenhärteverfahren Induktions- und Einsatzhärten, Laserhärten oder Nitrieren, sowie Kaltverfestigungsverfahren, wie Festwalzen, Kugelstrahlen oder Schlagverfestigen. Hierbei handelt es sich um gängige und zum großen Teil ausgereifte Verfahren, die für die verschiedensten Einsatzzwecke geeignet sind.

Hinsichtlich Beispielen für solche Verfahren wird auf die folgenden Druckschriften verwiesen: EP 1 479 480 A1, EP 0 788 419 B1, EP 1 612 290 A1, DE 10 2007 028 888 A1 und EP 1 034 314 B1.

Insbesondere das Schlagverfestigen ist ein vorteilhaftes Verfahren zur Steigerung der Dauerschwingfestigkeit, insbesondere der Biegewechselfestigkeit und der Torsionswechselfestigkeit, von Kurbelwellen. Die Steigerung der Dauerfestigkeit wird dabei dadurch erreicht, dass in die beanspruchten Bereiche bei Querschnittsübergängen und Querschnittsänderungen durch Kaltverformen, vorzugsweise Hämmern mittels spezieller Schlagwerkzeuge, in die Kurbelwelle Schlagkräfte eingebracht werden. Als Beispiel für ein derartiges Verfahren wird auf die DE 34 38 742 C2 und die EP 1 716 260 B1 verwiesen.

Die gattungsgemäße DE 10 2006 058 710 A offenbart eine Werkzeugmaschine zum Schlagverfestigen der Wangenradienübergänge von Kurbelwellen für Brennkraftmaschinen. Vorgesehen ist, dass sich die Kurbelwelle während der Impulseinbringung in Drehung befindet und dass die Druckeigenspannungen mittels zwei baugleichen Bearbeitungsvorrichtungen gleichzeitig eingebracht werden.

Der vorliegenden Erfindung liegt die Aufgabe zugrunde, die Verfahren und Vorrichtungen zum Schlagverfestigen weiter zu entwickeln, um die Dauerfestigkeit von Kurbelwellen weiter zu verbessern.

Diese Aufgabe wird für die Vorrichtung durch die in Anspruch 1 aufgeführten Merkmale und für das Verfahren durch die in Anspruch 10 aufgeführten Merkmale gelöst.

Die abhängigen Ansprüche und die nachfolgend beschriebenen Merkmale betreffen vorteilhafte Ausführungsformen und Varianten der Erfindung.

Die erfindungsgemäße Vorrichtung zum Schlagverfestigen von Übergangsradien einer Kurbelwelle, insbesondere von Übergangsradien zwischen Pleuellagerzapfen und Kurbelwangen und/oder Übergangsradien zwischen Hauptlagerzapfen und den Kurbelwangen der Kurbelwelle umfasst wenigstens eine Schlageinrichtung, um eine Schlagkraft in wenigstens einen Übergangsradius einzubringen.

Es kann also auch mehr als eine Schlageinrichtung, beispielsweise zwei Schlageinrichtungen, drei Schlageinrichtungen oder vier Schlageinrichtungen, vorgesehen sein, um die Schlagkraft in wenigstens einen Übergangsradius einzubringen. Die Schlageinrichtungen können dabei unterschiedlich ausgestaltet sein, insbesondere kann es genügen, wenn eine Schlageinrichtung erfindungsgemäß ausgestaltet ist. Es können auch zwei, mehrere oder alle Schlageinrichtungen erfindungsgemäß ausgebildet sein.

Die Pleuellagerzapfen und die Hauptlagerzapfen werden zur Vereinfachung nachfolgend teilweise auch nur als "Zapfen" bezeichnet. Der Begriff Zapfen kann dabei sowohl die Pleuellagerzapfen und die Hauptlagerzapfen bezeichnen, als auch nur die Pleuellagerzapfen oder nur die Hauptlagerzapfen. Insofern dies nicht explizit anders angegeben ist, sind hier alle drei Varianten durch den Begriff Zapfen umfasst.

Besonders bevorzugt eignet sich die Erfindung zur Steigerung der Dauerfestigkeit von beispielsweise Kurbelwellen mit 0,2 bis 8 m Länge oder mehr und/oder Haupt- und Pleuellagerzapfendurchmesser von 30 bis 500 mm oder mehr. Ganz besonders eignet sich die Erfindung allerdings zur Steigerung der Dauerfestigkeit von Großkurbelwellen von 1,5 bis 8 m Länge oder mehr und/oder Haupt- und Pleuellagerzapfendurchmesser von 100 bis 500 mm oder mehr.

Die Kurbelwelle kann verschiedene Arten von Übergangsradien, beispielsweise Hohlkehlen, zum Beispiel in Korbbogenform, oder auch hinterschnittene bzw. hinterlegte Radien bzw. Radien mit Übergängen, aufweisen. Die Übergangsradien können beispielsweise tangierend in die Lagerzapfenstellen bzw. Laufflächen der Haupt- und Pleuellagerzapfen übergehen.

Dies gilt auch für Übergänge zu Flanschen, Zapfen und sonstigen geometrischen Querschnittsveränderungen - sowohl für tangierende wie hinterlegte Radien.

Üblicherweise weist die Kurbelwelle an allen Übergängen bzw. Querschnittsänderungen Übergangsradien auf. Dies gilt insbesondere für Querschnittsänderungen zwischen Lagerzapfen und Kurbelwangen. Hierfür eignet sich die Erfindung in besonderer Weise. Übergangsradien können aber auch für beliebige andere Querschnittsänderungen, insbesondere für Querschnittsänderungen an den Endpartien der Kurbelwelle, z. B. bei einem Übergang auf einen Flansch, eine Scheibe oder eine Welle etc., vorgesehen sein. Ein Übergangsradius, dessen Dauerfestigkeit durch das erfindungsgemäße Verfahren bzw. die erfindungsgemäße Vorrichtung verbessert werden soll, muss somit nicht unbedingt zwischen einem Pleuellagerzapfen und einer Kurbelwange oder einem Hauptlagerzapfen und einer Kurbelwange vorliegen, sondern kann an einer beliebigen Stelle der Kurbelwelle angeordnet sein. Die Begriffe "Pleuellagerzapfen", "Hauptlagerzapfen", "Flansch", "Zapfen" und/oder "Kurbelwange" können dementsprechend von einem Fachmann umgedeutet werden.

Nachfolgend wird die Erfindung im Wesentlichen anhand der Verfestigung von Übergangsradien zwischen Pleuellagerzapfen und Kurbelwange und/oder Hauptlagerzapfen und Kurbelwange beschrieben. Dies ist aber nicht einschränkend zu verstehen und soll nur dem besseren Verständnis bzw. der besseren Lesbarkeit dienen. Insofern im Rahmen der Erfindung auf einen Übergangsradius Bezug genommen wird kann es sich grundsätzlich um einen beliebigen Übergangsradius an einer beliebigen Stelle der Kurbelwelle handeln.

Erfindungsgemäß weist die Schlageinrichtung mehrere Schlagköpfe auf, die demselben Übergangsradius zugeordnet sind.

Unter dem Einbringen einer Schlagkraft kann verstanden werden, dass ein Schlagkopf der Schlageinrichtung bzw. ein sog. "Döpper" der Schlageinrichtung gegen den zu verfestigenden Bereich der Kurbelwelle, vorliegend einen Übergangsradius, schlägt. Der Schlag erfolgt dabei zielgerichtet auf die gewünschte Schlagposition entlang des ringförmig um den Zapfen umlaufenden Übergangsradius.

Dadurch, dass die Schlagverfestigung eines Übergangsradius durch mehrere Schlagköpfe erfolgt, können Umfang und Tiefenwirkung der Druckeigenspannungen gezielt vorgegeben werden. Die erfindungsgemäße Lösung ermöglicht es also, die Schlagkraft entlang des Umfangs des Übergangsradius in einer beliebigen "Breite" und/oder Intensität, gegebenenfalls auch gestaffelt nacheinander, einzubringen.

Die Verfahren bzw. Vorrichtungen gemäß dem Stand der Technik sehen vor, dass bei der Schlagverfestigung eines Übergangsradius die Schlagkraft mit einem einzigen Schlagkopf in einen Übergangsradius eingebracht wird. Somit kann lediglich die Größe des Schlagkopfes variiert werden, wobei die Größe des Schlagkopfes dabei zunächst durch die Größe des Übergangsradius beschränkt ist und eine Verringerung der Größe des Schlagkopfes gleichzeitig zu einer veränderten Tiefenwirkung der Schlagverfestigung führt. Das heißt, gemäß dem Stand der Technik ist es nicht möglich, den Umfang der Schlagverfestigung bzw. die Breite des Bereichs, in den Druckeigenspannungen eingebracht werden sollen, beliebig zu verändern, ohne gleichzeitig die Tiefenwirkung zu beeinflussen. Bei Verwendung der erfindungsgemäßen Lösung kann durch die Verwendung mehrerer Schlagköpfe dieser Zusammenhang entfallen. Die Flexibilität wird dadurch erhöht und die Druckeigenspannungen können noch gezielter eingebracht werden.

Die Kurbelwelle kann hierdurch gegebenenfalls noch besser an den Motorenbetrieb angepasst werden. Nicht zuletzt kann außerdem die Festigkeit der Kurbelwelle - ausgehend von den derzeitigen Möglichkeiten im Stand der Technik - sogar noch erhöht werden, sollte dies erforderlich sein.

Das erfindungsgemäße Verfahren bzw. die erfindungsgemäße Vorrichtung kann auch bei Kurbelwellen angewendet bzw. eingesetzt werden, die bereits vorher zur Steigerung ihrer Dauerfestigkeitseigenschaften durch andere Verfahren bearbeitet worden sind. So kann zum Beispiel eine Kurbelwelle, die durch Induktionshärten gehärtet wurde, nachträglich noch bezüglich ihrer Biege- und Torsionswechselfestigkeit durch eine Einbringung von Druckeigenspannungen mit der erfindungsgemäßen Vorrichtung bzw. dem erfindungsgemäßen Verfahren verbessert werden.

Eine Ausbildung der Schlageinrichtung mit mehreren Schlagköpfen, die demselben Übergangsradius zugeordnet sind, lässt sich auf verschiedene Weise erreichen. Möglich ist es beispielsweise, dass die Schlageinrichtung über zwei oder mehrere Schlagwerkzeuge verfügt, die jeweils einen Schlagkopf aufweisen und die demselben Übergangsradius zugeordnet sind.

Erfindungsgemäß ist vorgesehen, dass die Schlageinrichtung mehrere Schlagwerkzeuge aufweist, wobei die Schlagköpfe wenigstens zweier Schlagwerkzeuge demselben Übergangsradius zugeordnet sind und/oder dass die Schlageinrichtung wenigstens ein Schlagwerkzeug mit mehreren Schlagköpfen aufweist.

Es kann insbesondere vorgesehen sein, dass die Schlageinrichtung zwei Schlagwerkzeuge aufweist, wobei jedes Schlagwerkzeug einem Übergangsradius zugeordnet ist, und wobei wenigstens eines der Schlagwerkzeuge eine Mehrzahl an Schlagköpfen aufweist, die dem entsprechenden Übergangsradius zugeordnet sind.

Möglich ist es auch, dass die Schlageinrichtung ein Paar von Schlagwerkzeugen aufweist, wobei jedes Schlagwerkzeug einem Übergangsradius zugeordnet ist. Die beiden Schlagwerkzeuge eines Schlagwerkzeugpaars können dabei jeweils zwei oder mehrere Schlagköpfe aufweisen. Es kann auch vorgesehen sein, dass nur eines der Schlagwerkzeuge über zwei oder mehrere Schlagköpfe verfügt, während das andere Schlagwerkzeug des Schlagwerkzeugpaars nur einen Schlagkopf aufweist.

In einer Weiterbildung kann ferner vorgesehen sein, dass die Schlageinrichtung einen Schlagkolben und eine Umlenkeinheit aufweist, wobei das wenigstens eine Schlagwerkzeug an der Umlenkeinheit angeordnet ist, und wobei der Schlagkolben über die Umlenkeinheit einen Kraftstoß auf das wenigstens eine Schlagwerkzeug überträgt und der Schlagkopf bzw. die Schlagköpfe des wenigstens einen Schlagwerkzeugs die Schlagkraft in den zugeordneten Übergangsradius einbringt bzw. einbringen.

Hierzu kann ein Schlagkolben eingesetzt werden, der einen starken Impuls bzw. einen Kraftstoß (z. B. pneumatisch, hydraulisch und/oder elektrisch erzeugt) auf den Schlagkopf überträgt.

Je nach Schlagkraft entstehen sichtbare Schlageindrücke des Schlagkopfes an den jeweiligen Schlagpositionen. Die Tiefe der Schlageindrücke und die Qualität bzw. die Tiefenwirkung der eingebrachten Druckeigenspannung hängen dabei von der gewählten Schlagkraft ab. Das Werkzeug und die Prozessparameter sind vorzugsweise auf die jeweilige Kurbelwelle und dabei ggf. auf partielle geometrische Änderungen (Querschnittsänderungen) exakt abgestimmt.

Die Schlagkraft wiederum kann durch Veränderung des Schlagwinkels individuell noch genauer auf das Beanspruchungsmaximum eingestellt bzw. ausgerichtet werden.

Es sei klargestellt, dass, sollte in einem Teil der Beschreibung "ein Schlagkopf/Schlagwerkzeug" bzw. "eine Schlageinrichtung" oder "mehrere Schlagköpfe/Schlagwerkzeuge/Schlageinrichtungen" erwähnt werden, grundsätzlich eine beliebige Anzahl an Schlagköpfen/Schlagwerkzeugen/Schlageinrichtungen gemeint sein kann, beispielsweise zwei, drei, vier, fünf, sechs, sieben, acht, neun, zehn oder mehr. Die Bezugnahme auf eine Pluralform oder Einzahl ist lediglich zur besseren Lesbarkeit vorgesehen und nicht einschränkend.

Es kann vorgesehen sein, dass zwei Schlagwerkzeuge in einer gemeinsamen Schlageinrichtung verwendet werden, die vorzugsweise Schlagkräfte in beide Übergangsradien eines Pleuellagerzapfens oder eines Hauptlagerzapfens gleichzeitig einbringen.

Dies gilt auch für Übergänge zu Flanschen, Zapfen und sonstigen geometrischen Querschnittsveränderungen - sowohl für tangierende wie hinterlegte Radien.

Die Schlagwerkzeuge können vorzugsweise von einem gemeinsamen Schlagkolben betrieben werden.

Bei Verwendung mehrerer Schlagwerkzeuge (und/oder Schlageinrichtungen) kann eine gemeinsame Druckimpulsvorrichtung vorgesehen sein, die die entsprechenden Schlagkräfte für die Schlagwerkzeuge auf hydraulische, pneumatische, mechanische und/oder elektrische Weise (gemeinsam oder individuell) für die Schlagwerkzeuge zu erzeugen vermag.

Es kann dabei vorgesehen sein, dass wenigstens zwei oder mehrere oder alle Schlagwerkzeuge, die demselben Übergangsradius zugeordnet sind, jeweils einen Schlagkopf aufweisen. Alternativ kann auch vorgesehen sein, dass wenigstens zwei, mehrere oder alle Schlagwerkzeuge, die demselben Übergangsradius zugeordnet sind, über jeweils mehrere Schlagköpfe verfügen. Möglich sind hier auch Mischformen, das heißt, dass wenigstens ein Schlagwerkzeug einen Schlagkopf aufweist und wenigstens ein demselben Übergangsradius zugeordnetes Schlagwerkzeug zwei oder mehrere Schlagköpfe aufweist.

Es kann also beispielsweise auch vorgesehen sein, dass eine Schlageinrichtung mehrere Schlagwerkzeuge mit jeweils nur einem Schlagkopf aufweist, die allerdings demselben Übergangsradius zugeordnet sind. Es ist auch möglich, dass die Schlageinrichtung mehrere Schlagwerkzeuge mit jeweils nur einem Schlagkopf aufweist, wobei ein weiteres Schlagwerkzeug mit mehreren Schlagköpfen vorgesehen ist. Es sind beliebige Zusammenstellungen bzw. Kombinationen möglich. Eine Auslegung kann auch von den Anforderungen an die Kurbelwelle abhängig sein.

Es ist somit möglich, die erfindungsgemäße Vorrichtung an die Anforderungen der Kurbelwelle bzw. die Anforderungen an die Festigkeit der Übergangsradien entsprechend anzupassen, wobei eine hohe Anzahl von Gestaltungsmöglichkeiten besteht.

In einer Weiterbildung der Erfindung kann vorgesehen sein, dass die Schlagköpfe derart angeordnet sind, dass die Schlagköpfe beim Schlagverfestigen eines ringförmig um den Pleuellagerzapfen und/oder den Hauptlagerzapfen umlaufenden Übergangsradius hintereinander versetzt und/oder nebeneinander versetzt angeordnet sind.

Durch einen seitlichen Versatz bzw. durch eine Anordnung von nebeneinander versetzten Schlagköpfen kann die "Breite" über die Druckeigenspannungen in den Übergangsradius entlang des Umfangs des Übergangsradius eingebracht werden, durch die Anzahl der verwendeten Schlagköpfe variiert werden.

Wenn die Schlagköpfe hintereinander versetzt anordnet sind, können die Bearbeitungsdauer und/oder der Bearbeitungseffekt bzw. die Tiefenwirkung der Bearbeitung verbessert sein. Es ist ferner möglich, die Schläge gestaffelt, gegebenenfalls mit unterschiedlicher Intensität, nacheinander einzubringen.

In einer Weiterbildung der Erfindung kann insbesondere vorgesehen sein, dass wenigstens zwei Schlagköpfe, vorzugsweise alle demselben Übergangsradius zugeordnete Schlagköpfe, derart angeordnet sind, dass die Schlagköpfe beim Schlagverfestigen eines ringförmig um den Pleuellagerzapfen und/oder den Hauptlagerzapfen umlaufenden Übergangsradius jeweils eigene Spuren von Schlageindrücken erzeugen.

In einer Weiterbildung kann schließlich vorgesehen sein, dass sich die Spuren überlappen.

Insbesondere durch sich überlappende Spuren von Schlageindrücken entlang des Umfangs des Übergangsradius und/oder entlang des ringförmig um den Pleuellagerzapfen und/oder den Hauptlagerzapfen umlaufenden Übergangsradius kann der Verfestigungseffekt besonders positiv beeinflusst werden.

In einer Weiterbildung der Erfindung kann außerdem vorgesehen sein, dass wenigstens zwei Schlagköpfe, vorzugsweise alle demselben Übergangsradius zugeordnete Schlagköpfe, derart angeordnet sind, dass die Schlagköpfe beim Schlagverfestigen eines ringförmig um den Pleuellagerzapfen und/oder den Hauptlagerzapfen umlaufenden Übergangsradius jeweils ineinander liegende Spuren von Schlageindrücken erzeugen.

Beispielsweise kann eine erste Spur von Schlageindrücken mit großer Breite entlang des Umfangs des Übergangsradius vorgesehen sein, in dem eine zweite Spur von Schlageindrücken mit geringerer Breite verläuft. Hierdurch kann die Tiefe der eingebrachten Druckeigenspannungen gegebenenfalls verbessert sein.

Alternativ können die Spuren, die die verschiedenen Schlagköpfe verursachen, jeweils auch eine gleiche Breite aufweisen, wodurch ein gestaffeltes Schlagverfestigen realisiert werden kann, wodurch andere Effekte möglich sind, als wäre die Schlagverfestigung nur durch einen einzigen Schlagkopf und somit mit einem einzigen Schlag erfolgt.

In einer Weiterbildung der Erfindung kann außerdem vorgesehen sein, dass die Schlagköpfe zum Schlagverfestigen eine kugelförmige Oberfläche aufweisen.

Der Schlagkopf kann vorzugsweise im Wesentlichen kugelförmig ausgebildet sein, insbesondere im vorderen Bereich bzw. am vorderen Ende des Schlagkopfes, der bzw. das zur Verfestigung gegen die Kurbelwelle schlägt. Grundsätzlich kann der Schlagkopf aber eine beliebige Geometrie aufweisen und beispielsweise auch oval, halbkugelförmig oder flach ausgebildet sein.

In einer Weiterbildung der Erfindung kann vorgesehen sein, dass die Schlagköpfe unterschiedliche Größen aufweisen.

Beispielsweise kann vorgesehen sein, dass ein Schlagkopf einen Radius aufweist, dessen Größe 75% bis 99% des Übergangsradius, vorzugsweise 85% bis 98% des Übergangsradius und besonders bevorzugt 85% bis 95% des Übergangsradius beträgt.

Der Radius des Schlagkopfes kann aber auch kleiner sein als 75% des Übergangsradius oder größer sein als 95% des Übergangsradius. Der Radius des Schlagkopfes kann auch mit dem Übergangsradius übereinstimmen.

Die Größe des Schlagkopfes kann gegebenenfalls von der Anzahl verwendeter Schlagköpfe pro Übergangsradius abhängen. Grundsätzlich sind kleinere Schlagköpfe zu bevorzugen, je größer die verwendete Anzahl Schlagköpfe pro Übergangsradius ist. Wenn beispielsweise zwei Schlagköpfe für einen Übergangsradius vorgesehen sind, kann ein Schlagkopf beispielsweise einen Radius aufweisen, dessen Größe 30% bis 49% des Übergangsradius, vorzugsweise 40% bis 48% des Übergangsradius und ganz besonders bevorzugt 40% bis 45% des Übergangsradius beträgt. Wenn beispielsweise drei Schlagköpfe für einen Übergangsradius vorgesehen sind, kann ein Schlagkopf zum Beispiel einen Radius aufweisen, dessen Größe 10% bis 33% des Übergangsradius, vorzugsweise 20% bis 30% des Übergangsradius und ganz besonders bevorzugt 20% bis 25% des Übergangsradius beträgt.

Erfindungsgemäß kann auch vorgesehen sein, dass die demselben Übergangsradius zugeordneten Schlagköpfe jeweils eine identische Größe aufweisen.

Es ist auch möglich, dass bei einer Anordnung der Schlagköpfe hintereinander und/oder nebeneinander die Schlagköpfe unterschiedliche Größen aufweisen. Bei einer Anordnung hintereinander kann beispielsweise vorgesehen sein, dass der in Bewegungsrichtung vorne liegende Schlagkopf größer ausgebildet ist als die nachfolgenden Schlagköpfe. Bei einer Anordnung nebeneinander kann beispielsweise der mittlere Schlagkopf größer ausgebildet sein als die beiden äußeren - oder umgekehrt. Hier sind beliebige Varianten realisierbar, um die Schlageindrücke bzw. die eingebrachte Schlagkraft zu variieren.

In einer besonderen Ausgestaltung der Erfindung kann vorgesehen sein, dass die Vorrichtung eingerichtet ist, um den Abstand zwischen einem Umlenkpunkt der Umlenkeinheit und dem vorderen Ende des einen Schlagkopfes oder der mehreren Schlagköpfe eines Schlagwerkzeugs einzustellen.

Bei dem Umlenkpunkt kann es sich um den Mittelpunkt der Umlenkeinheit handeln bzw. um die Drehachse/Aufhängung des Schlagwerkzeugs bzw. der Schlagwerkzeuge.

Mit dem vorderen Ende des Schlagkopfes ist der Teil (bzw. die Oberfläche) des Schlagkopfes gemeint, mit dem der Schlagkopf zum Schlagverfestigen gegen die Kurbelwelle schlägt.

Durch den Abstand zwischen dem Umlenkpunkt und dem vorderen Ende des Schlagkopfes kann auch der Abstand zwischen dem Umlenkpunkt und dem Mittelpunkt des Schlagkopfes oder der Abstand zwischen dem Umlenkpunkt und dem hinteren Ende des Schlagkopfes einstellbar sein.

Dadurch, dass der Abstand zwischen dem Umlenkpunkt der Umlenkeinheit und dem oder den Schlagköpfen eines Schlagwerkzeugs einstellbar ist, kann der Winkel unter dem die Schlagkraft in den Übergangsradius eingeleitet wird, verändert bzw. eingestellt werden. Vorzugsweise wird der Winkel derart gewählt, dass die Schlagkraft in einem Winkel eingeleitet wird, der genau auf die im Betrieb der Kurbelwelle höchstbelastete Stelle bzw. das Beanspruchungsmaximum angepasst ist.

Die Einstellung des Schlagwinkels, d. h. die Ausrichtung, mit der das Schlagwerkzeug von dem Umlenkpunkt zu dem Übergangsradius verläuft, ermöglicht es, den Verlauf der Schlagkraft zu variieren. Wenn das Schlagwerkzeug über mehrere Schlagköpfe verfügt, die hintereinander angeordnet sind, lassen sich durch die Wahl eines geeigneten Schlagwinkels die Schlagkräfte der verschiedenen Schlagkörper an einer geeigneten Stelle und in einem geeigneten Winkel einbringen. Die Schlagposition und der Schlagwinkel entsprechen vorzugsweise einem Verlauf eines Beanspruchungsmaximums des Übergangsradius.

Insofern das Schlagwerkzeug über mehrere Schlagköpfe verfügt, die nebeneinander angeordnet sind, kann beispielsweise vorgesehen sein, dass ein mittlerer Schlagkopf hinsichtlich seiner Schlagposition und des Schlagwinkels auf das Beanspruchungsmaximum ausgerichtet ist oder dass sich das Beanspruchungsmaximum zwischen zwei mittleren Schlagköpfen befindet.

Die Variation des Schlagwinkels, d. h. der Verlauf des Schlagwerkzeugs, an dem die Schlagköpfe angeordnet sind, ermöglicht es, präzise auf die Anforderung der entsprechenden Kurbelwelle einzugehen, insbesondere das Beanspruchungsmaximum des Übergangsradius gezielt zu bearbeiten.

Ein besonderer Vorteil kann sich ergeben, wenn mehrere Schlagwerkzeuge demselben Übergangsradius zugeordnet sind. Durch die Variation des Schlagwinkels der Schlagwerkzeuge kann somit nicht nur die Position, in der die Schlagköpfe der einzelnen Schlagwerkzeuge den Übergangsradius treffen, variiert werden, sondern auch deren Schlagwinkel. So ist es beispielsweise auch möglich, dass die Schlagpositionen der Schlagköpfe der einzelnen Schlagwerkzeuge identisch, der Winkel jedoch abweichend ist.

Die besondere Ausgestaltung, den Abstand zwischen einem Umlenkpunkt der Umlenkeinheit und dem vorderen Ende des einen Schlagkopfes oder der mehreren Schlagköpfe des wenigstens einen Schlagwerkzeugs zu variieren, ermöglicht es somit, die Schlagkraft an einer bevorzugten Stelle und in einem bevorzugten Winkel einzubringen.

Mit den Verfahren bzw. Vorrichtungen des bekannten Standes der Technik ist es im Gegensatz dazu nur möglich, die Schlagkraft in einem vordefinierten fixen Winkel in die Übergangsradien einzubringen. Hierfür ist meist ein Schlagwinkel von ca. 45° vorgesehen.

In Abhängigkeit der Anwendung der Kurbelwelle kann es von Vorteil sein, statt eines festen Schlagwinkels von beispielsweise 45° einen abweichenden Winkel zu wählen.

Die höchstbelastete Stelle der Kurbelwelle ergibt sich im Regelfall aus dem Motorenbetrieb bzw. wird über Berechnungsmodelle bestimmt. Für neue Betrachtungsansätze werden dazu die maximalen Belastungen aus einaxialer Belastung und aus biaxialer, überlagerter Belastung betrachtet.

Durch das Einstellen des Schlagwinkels kann ein hochpräzises Arbeiten bzw. Schlagverfestigen gewährleistet sein. Dadurch, dass die Schlagkräfte gezielt in ein Beanspruchungsmaximum des Übergangsradius eingebracht werden können und in einem optimalen Winkel verlaufen, kann gegebenenfalls die Schlagkraft reduziert werden, während der erreichbare Dauerfestigkeitseffekt unverändert bleibt. Die Vorrichtung ist somit besonders effizient.

Es kann vorgesehen sein, dass zwei oder mehr Schlagwerkzeuge einem gemeinsamen Übergangsradius zugeordnet sind, wobei die Schlagwerkzeuge jeweils wenigstens einen (vorzugsweise genau einen) Schlagkopf aufweisen und ein Schlagwinkel der Schlagwerkzeuge nicht identisch ist.

In einer Ausgestaltung der Erfindung kann vorgesehen sein, dass die Länge des wenigstens einen Schlagwerkzeugs einstellbar, vorzugsweise teleskopierbar ist.

Hierzu kann das Schlagwerkzeug in der Art einer Teleskopschiene ausgebildet sein bzw. einen Teleskopauszug aufweisen. Das wenigstens eine Schlagwerkzeug kann auch als Teleskoprohr ausgebildet sein. Die Erfindung ist selbstverständlich nicht auf eine bestimmte Art des Teleskopauszugs bzw. eine bestimmte Art der Teleskopierbarkeit beschränkt zu verstehen.

Die Länge des wenigstens einen Schlagwerkzeugs kann beispielsweise auch über ein Gewinde eingestellt werden.

Es kann vorgesehen sein, dass die Länge des wenigstens einen Schlagwerkzeugs manuell und/oder aktorisch einstellbar ist. Hierzu kann beispielsweise ein Elektromotor, insbesondere ein Linearantrieb, vorgesehen sein. Bei dem Elektromotor kann es sich grundsätzlich aber um einen beliebigen Elektromotor, beispielsweise einen Drehstrommotor, einen Wechselstrommotor, einen Gleichstrommotor oder einen Universalmotor, handeln. Vorzugsweise kann ein Schrittmotor verwendet werden.

In einer Ausgestaltung der Erfindung kann eine Wechseleinrichtung mit einem Magazin vorgesehen sein, um das wenigstens eine Schlagwerkzeug und/oder den wenigstens einen Schlagkopf und/oder die Umlenkeinheit und/oder die Schlageinrichtung auszutauschen, um den Abstand zwischen dem Umlenkpunkt der Umlenkeinheit und dem vorderen Ende eines Schlagkopfes des wenigstens einen Schlagwerkzeugs auf einen anderen Wert einzustellen.

Durch die hohen Schlagkräfte wirken bekanntermaßen hohe mechanische Belastungen auf die Komponenten der Schlageinrichtung. Insbesondere bei Verwendung filigraner Bauteile zur Einstellung der Länge des wenigstens einen Schlagwerkzeugs kann dadurch die Lebensdauer der Schlageinrichtung bzw. deren Komponenten eingeschränkt sein. Wenn ein Magazin bzw. eine Wechseleinrichtung für das wenigstens eine Schlagwerkzeug und/oder die Schlagköpfe und/oder die Umlenkeinheit und/oder die Schlageinrichtung vorgesehen ist, kann die Schlageinrichtung bzw. die Vorrichtung insgesamt besonders robust ausgebildet sein, da gegebenenfalls auf eine Teleskopierung des wenigstens einen Schlagwerkzeugs verzichtet werden kann.

Der Abstand zwischen dem Umlenkpunkt der Umlenkeinheit und den Schlagköpfen des wenigstens einen Schlagwerkzeugs kann somit vorteilhaft durch die Wechseleinrichtung mit dem Magazin einstellbar sein, indem Komponenten der Schlageinrichtung zur Längeneinstellung ausgetauscht werden.

Es kann auch vorgesehen sein, dass der Abstand zwischen dem Umlenkpunkt der Umlenkeinheit und dem vorderen Ende eines Schlagkopfes des wenigstens einen Schlagwerkzeugs durch Verwenden von Distanzringen bzw. Abstandshaltern mit unterschiedlichen Abmessungen einstellbar ist.

In einer Ausgestaltung der Erfindung können zwei oder mehrere Schlageinrichtungen vorgesehen sein, wobei der Abstand zwischen dem Umlenkpunkt der Umlenkeinrichtung und dem vorderen Ende des Schlagkopfes oder der Schlagköpfe einer ersten Schlageinrichtung nicht identisch ist mit dem Abstand zwischen dem Umlenkpunkt der Umlenkeinrichtung und dem vorderen Ende des Schlagkopfes oder der Schlagköpfe einer zweiten Schlageinrichtung.

Es können somit mehrere unabhängig voneinander verwendbare Schlagwerkzeuge, insbesondere durch Verwenden mehrerer Schlageinrichtungen mit jeweils einem oder mehreren Schlagwerkzeugen, vorgesehen sein, die jeweilige Schlagkräfte in beliebige Übergangsradien der Kurbelwelle einzubringen vermögen, wobei eine entsprechende Synchronisierung untereinander bzw. zwischen Steuerungen der Schlagwerkzeuge vorgesehen sein kann. Die Schlagverfestigung der Kurbelwelle kann somit auch besonders schnell erfolgen, da mehrere Schlageinrichtungen gleichzeitig verwendbar sind.

Bei Verwendung mehrerer Schlageinrichtungen kann vorgesehen sein, dass die jeweiligen Abstände zwischen den Umlenkpunkten und den Schlagköpfen bei allen Schlagwerkzeugen identisch sind oder bei zumindest zwei Schlagwerkzeugen voneinander abweichen. Vorzugsweise ist der jeweilige Abstand zwischen dem Umlenkpunkt der Umlenkeinheit und den Schlagköpfen zweier Schlagwerkzeuge, die zur Verfestigung von Übergangsradien, die an denselben Zapfen angrenzen, identisch.

In einer Ausgestaltung der Erfindung kann vorgesehen sein, dass der Schlagwinkel zwischen der Längsachse des wenigstens einen Schlagwerkzeugs und einem Lot zu der Längsachse der Kurbelwelle 5° bis 80°, vorzugsweise 10° bis 70°, weiter bevorzugt 20° bis 60° und besonders bevorzugt 30° bis 55°, insbesondere 35° bis 50°, beträgt.

Die Erfindung betrifft auch ein Verfahren zum Schlagverfestigen von Übergangsradien einer Kurbelwelle, insbesondere von Übergangsradien zwischen Pleuellagerzapfen und Kurbelwangen und/oder Übergangsradien zwischen Hauptlagerzapfen und den Kurbelwangen der Kurbelwelle.

Das Verfahren betrifft auch für Übergänge zu Flanschen, Zapfen und sonstigen geometrischen Querschnittsveränderungen - sowohl für tangierende wie hinterlegte Radien.

Das erfindungsgemäße Verfahren sieht vor, dass die Schlagverfestigung von Übergangsradien mittels einer Schlageinrichtung erfolgt, die mehrere Schlagköpfe aufweist, die demselben Übergangsradius zugeordnet sind.

Merkmale, die bereits im Zusammenhang mit der erfindungsgemäßen Vorrichtung beschrieben wurden, sind selbstverständlich auch für das erfindungsgemäße Verfahren vorteilhaft umsetzbar - und umgekehrt. Ferner können Vorteile, die bereits im Zusammenhang mit der erfindungsgemäßen Vorrichtung genannt wurden, auch auf das erfindungsgemäße Verfahren bezogen verstanden werden - und umgekehrt.

In einer Ausgestaltung des Verfahrens kann vorgesehen sein, dass der Schlagwinkel entsprechend dem Verlauf eines Beanspruchungsmaximums des Übergangsradius gewählt wird, wonach der Verlauf des Beanspruchungsmaximums auf Basis von Simulationen und/oder Berechnungen und/oder Versuchsreihen des jeweiligen Kurbelwellentyps bestimmt wird.

Die höchstbelasteten Stellen der Kurbelwelle werden vorzugsweise im Vorfeld identifiziert. Die Schlagkraft kann dann vorzugsweise gezielt in die entsprechenden Beanspruchungsmaxima eingebracht werden.

Durch das vorzugsweise vorgesehene Einstellen des Abstands zwischen dem Umlenkpunkt der Umlenkeinheit und dem vorderen Ende des einen Schlagkopfes oder der Schlagköpfe des wenigstens einen Schlagwerkzeugs kann die Kurbelwelle mit besonders hoher Präzision schlagverfestigt werden.

Durch die Einstellung des Abstands ist nicht nur der Schlagpunkt, sondern auch die Schlagrichtung festlegbar. Hierdurch können Kurbelwellen hergestellt werden, deren Dauerschwingfestigkeit, insbesondere deren Biege- und Torsionswechselfestigkeit, weiter optimiert ist. Alternativ kann durch die nunmehr zur Verfügung stehende Präzision eine bestehende Dauerschwingfestigkeit bereits durch den Einsatz geringer Schlagkräfte erreicht werden.

In einer Ausgestaltung der Erfindung kann vorgesehen sein, dass alle Übergangsradien zwischen den Pleuellagerzapfen und den Kurbelwangen und/oder alle Übergangsradien zwischen den Hauptlagerzapfen und den Kurbelwangen unter demselben Schlagwinkel schlagverfestigt werden.

Es können auch alle Übergänge zu Flanschen, Zapfen und/oder sonstige geometrischen Querschnittsveränderungen - sowohl für tangierende wie hinterlegte Radien - unter demselben Schlagwinkel schlagverfestigt werden.

Es kann also vorgesehen sein, dass alle Übergangsradien der Kurbelwelle unter demselben Schlagwinkel schlagverfestigt werden, wobei der hierzu gewählte Schlagwinkel hinsichtlich der höchstbelasteten Stelle der Kurbelwelle optimiert ist. Es kann aber auch vorgesehen sein, dass alle Übergangsradien der Pleuellagerzapfen unter einem ersten Schlagwinkel schlagverfestigt werden und alle Übergangsradien der Hauptlagerzapfen unter einem zweiten Schlagwinkel schlagverfestigt werden, wobei der erste und der zweite Schlagwinkel entsprechend der jeweils höchstbelasteten Stellen bzw. dem Verlauf des Beanspruchungsmaximums optimiert sind.

In einer alternativen Ausgestaltung der Erfindung kann vorgesehen sein, dass wenigstens zwei Übergangsradien zwischen den Pleuellagerzapfen und den Kurbelwangen unter einem unterschiedlichen Schlagwinkel schlagverfestigt werden und/oder dass wenigstens zwei Übergangsradien zwischen den Hauptlagerzapfen und den Kurbelwangen unter einem unterschiedlichen Schlagwinkel schlagverfestigt werden und/oder dass wenigstens ein Übergangsradius zwischen dem Pleuellagerzapfen und den Kurbelwangen unter einem anderen Schlagwinkel schlagverfestigt wird, als ein Übergangsradius zwischen den Hauptlagerzapfen und den Kurbelwangen.

Die Schlagwinkel können somit individuell für jeden Übergangsradius oder für Gruppen von Übergangsradien festgelegt bzw. optimiert werden.

Beispielsweise können in einer Zapfenstelle gleichzeitig unterschiedliche Schlagwinkel zum Einsatz kommen.

In einer Ausgestaltung der Erfindung kann schließlich auch vorgesehen sein, dass während der Schlagverfestigung eines ringförmig um den Pleuellagerzapfen und/oder den Hauptlagerzapfen umlaufenden Übergangsradius der Schlagwinkel verändert wird.

Dies gilt selbstverständlich auch für Übergänge zu Flanschen, Zapfen und/oder sonstigen geometrischen Querschnittsveränderungen - sowohl für tangierende wie hinterlegte Radien.

Es hat sich gezeigt, dass sich hierdurch eine weitere Erhöhung der Dauerschwingfestigkeit bzw. Biegewechselfestigkeit und/oder Torsionswechselfestigkeit erreichen lässt.

Beispielsweise kann im sogenannten unteren Totpunkt eines Pleuellagerzapfens bzw. in einem definierten Bereich um den unteren Totpunkt herum ein anderer Schlagwinkel vorgesehen sein als im restlichen Bereich des Übergangsradius.

Die Schlagdrücke, die von dem Schlagkolben zu der Schlagkraft umgesetzt werden, können - je nach Betrieb - zwischen 10 und 300 bar, bevorzugt zwischen 30 und 180 bar, und besonders bevorzugt zwischen 50 und 130 bar, betragen.

Die Temperatur im Bereich des zu bearbeitenden Kurbelwellensegments bzw. Übergangsradius sollte vorzugsweise nicht höher als 65°C liegen; bevorzugt werden Werte zwischen 12°C und 25°C.

Die Erfahrung hat gezeigt, dass Kurbelwellen nach dynamischer Beanspruchung im Motor oder auf dem Prüfstand nicht ausbreitungsfähige Mikrorisse an den Oberflächen bekommen können. Auf die Dauerfestigkeitseigenschaften haben diese Mikrorisse keine Auswirkung, aber sie können das optische Erscheinungsbild stören.

Da die Einbringung von Druckeigenspannung vorzugsweise bis zu einer Tiefe von 15 mm, aber auch noch tiefer erfolgen kann, bedeutet dies, im Oberflächenbereich der Kurbelwelle kann eine Abtragung von einigen Millimetern, zum Beispiel von 0,1 bis 3 mm, vorzugsweise 0,5 mm, erfolgen, ohne dass die Biege- und Torsionswechselfestigkeit oder die Dauerschwingfestigkeit der Kurbelwelle leidet.

Untersuchungen haben gezeigt, dass derartige Maßnahmen die Dauerfestigkeit sogar geringfügig erhöhen können, beispielsweise um bis zu 5%.

Die Abtragung der Oberfläche kann auf verschiedene Weise erfolgen, wie zum Beispiel durch Schleifen, Drehen, Fräsen, Drehfräsen, Schälen oder Polieren.

Insbesondere wenn vorgesehen ist, dass der Schlagwinkel während dem Schlagverfestigen eines Übergangsradius aktorisch verändert wird, kann eine Steuer- und/oder Regeleinrichtung, vorzugsweise umfassend einen Mikroprozessor, vorgesehen sein, um die entsprechende Aktorik anzusteuern.

Anstelle eines Mikroprozessors kann auch eine beliebig weitere Einrichtung zur Implementierung einer Steuer- und/oder Regeleinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Einige der Komponenten der erfindungsgemäßen Vorrichtung können grundsätzlich in ihrem Aufbau der Vorrichtung nach der EP 1 716 260 B1 entsprechen.

Die Erfindung betrifft auch eine Kurbelwelle, hergestellt nach einem vorstehend beschriebenen Verfahren.

Die erfindungsgemäße Kurbelwelle unterscheidet sich von herkömmlichen Kurbelwellen insbesondere dadurch, dass zu deren Verfestigung wenigstens zwei Schlagköpfe demselben Übergangsradius zugeordnet werden und zusätzlich gegebenenfalls unterschiedliche Schlagwinkel verwendet werden, wodurch sich eine charakteristische Verfestigung der Übergangsradien ergibt.

Nachfolgend werden Ausführungsbeispiele der Erfindung anhand der Zeichnung näher beschrieben. Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

### Es zeigen schematisch:

- Fig. 1: eine Gesamtansicht einer erfindungsgemäßen Vorrichtung zur Durchführung des Verfahrens in einer ersten Ausführung;
- Fig. 2: eine perspektivische Ansicht eines Teils der erfindungsgemäßen Vorrichtung zur Durchführung des Verfahrens in einer zweiten Ausführung;
- Fig. 3: eine Schlageinrichtung mit zwei Schlagwerkzeugen in vergrößerter Darstellung gemäß Einzelheit "A" aus Fig. 1;
- Fig. 4: eine Schlageinrichtung mit nur einem Schlagwerkzeug;
- Fig. 5a: eine vergrößerte Darstellung eines Übergangsradius und eines Schlagwerkzeugs mit drei Schlagköpfen;
- Fig. 5b: eine vergrößerte Darstellung eines Übergangsradius und drei abgeflachten Schlagwerkzeugen mit jeweils einem Schlagkopf;
- Fig. 6: ein Beispiel für einen Versatz von Schlagköpfen;
- Fig. 7: einen mit drei Schlagköpfen schlagverfestigten Übergangsradius mit drei sich überlappende Spuren von Schlageindrücken;
- Fig. 8: einen mit zwei Schlagköpfen schlagverfestigten Übergangsradius mit ineinander liegenden Spuren von Schlageindrücken;
- Fig. 9: eine Schlageinrichtung mit zwei teleskopierbaren Schlagwerkzeugen;
- Fig. 10: eine vergrößerte Darstellung eines Übergangsradius und eines Schlagwerkzeugs mit einem Schlagkopf, wobei das Schlagwerkzeug auf einen ersten Schlagwinkel ausgerichtet ist;
- Fig. 11: eine vergrößerte Darstellung eines Übergangsradius und eines Schlagwerkzeugs mit einem Schlagkopf, wobei das Schlagwerkzeug auf einen zweiten Schlagwinkel ausgerichtet ist;
- Fig. 12: einen schlagverfestigten Übergangsradius, bei dem ein erster Schlagwinkel zur Schlagverfestigung verwendet wurde;
- Fig. 13: einen schlagverfestigten Übergangsradius, bei dem ein zweiter Schlagwinkel zur Schlagverfestigung verwendet wurde; und
- Fig. 14: einen schlagverfestigten Übergangsradius, bei dem der Schlagwinkel während der Schlagverfestigung entlang des ringförmig um den Zapfen umlaufenden Übergangsradius variiert wurde.

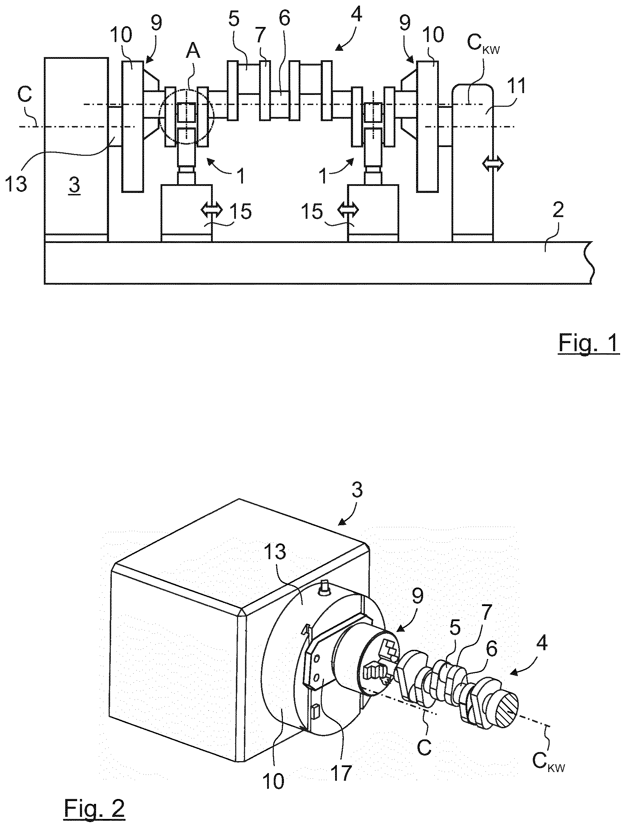

Die in Figur 1 in einer Gesamtansicht dargestellte Vorrichtung entspricht grundsätzlich in ihrem Aufbau den Vorrichtungen nach der DE 34 38 742 C2 und EP 1 716 260 B1 mit einer oder mehreren Schlageinrichtungen 1, weshalb nachfolgend nur auf die wesentlichen Teile und auf die Unterschiede zum Stand der Technik näher eingegangen wird.

Die Vorrichtung weist ein Maschinenbett 2 und eine Antriebseinrichtung 3 auf. Die Antriebseinrichtung 3 wird dazu verwendet, eine Kurbelwelle 4 entlang einer Drehrichtung in eine Schlagposition zu bringen bzw. zu drehen.

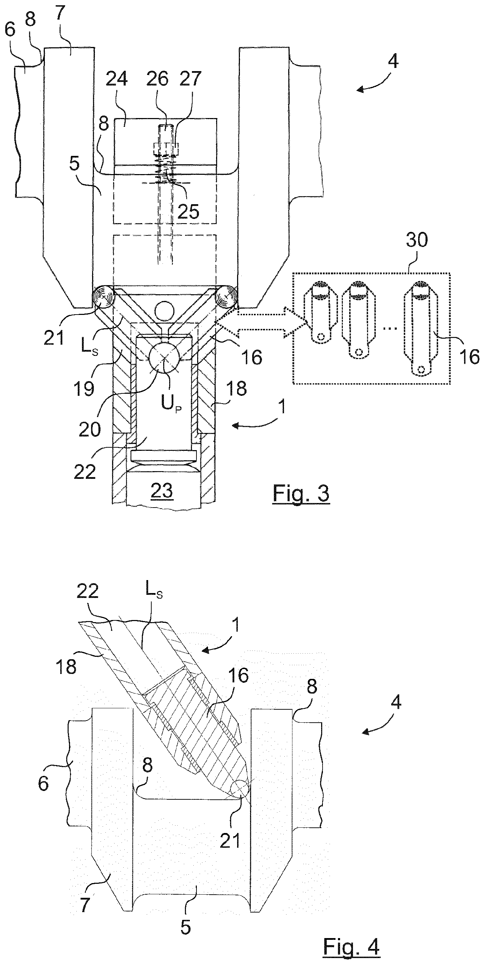

Die Kurbelwelle 4 weist Pleuellagerzapfen 5 und Hauptlagerzapfen 6, zwischen denen jeweils Kurbelwangen 7 angeordnet sind, auf. Zwischen Pleuellagerzapfen 5 und Kurbelwangen 7 sowie zwischen Hauptlagerzapfen 6 und Kurbelwangen 7 bzw. allgemein zwischen Querschnittsübergängen der Kurbelwelle 4 sind Übergangsradien 8 (vgl. Figuren 3 bis 8 und 10 bis 14) ausgebildet.

An der der Antriebseinrichtung 3 zugewandten Seite der Kurbelwelle 4 ist eine Befestigungseinrichtung 9 vorgesehen, die eine Spannscheibe bzw. einen Befestigungsflansch 10 aufweist. Auf der der Antriebseinrichtung 3 abgewandten Seite der Kurbelwelle 4 ist eine Abstützung 11 vorzugsweise in der Art eines Reitstocks vorgesehen, die eine weitere Befestigungseinrichtung 9 aufweist, um die Kurbelwelle 4 drehbar aufzunehmen bzw. drehbar festzulegen. Optional oder ergänzend zur Abstützung 11 kann eine Lünette, die an einer rotationssymmetrischen Stelle positioniert wird, vorgesehen sein.

Die Antriebseinrichtung 3 vermag die Kurbelwelle 4 entlang einer Drehachse C in eine Drehbewegung zu versetzen. Dabei kann vorgesehen sein, dass die Hauptdrehachse C_{KW} der Kurbelwelle 4 außermittig von der Drehachse C der Antriebseinrichtung 3 positioniert ist, wie in Figur 1 und Figur 2 dargestellt. Hierzu können vorzugsweise Ausrichtungsmittel 17 (vgl. Figur 2) im Bereich der Befestigungseinrichtung 9 vorgesehen sein. Dabei kann vorgesehen sein, dass die Ausrichtungsmittel 17 eine Mittelachse des jeweils zu verfestigenden Zapfens 5, 6 so verschieben, dass die Mittelachse des Zapfens 5, 6 auf der Drehachse C liegt.

Für die Antriebseinrichtung 3 kann ein Direktantrieb, vorzugsweise ohne Kupplung, vorgesehen sein. Ein Motor, vorzugsweise ein Elektromotor, der Antriebseinrichtung 3 kann somit ohne Übersetzung bzw. Getriebe mit der Befestigungseinrichtung 9 bzw. mit der Kurbelwelle 4 mechanisch gekoppelt sein. Zur Übertragung der Antriebsleistung kann eine Eingangswelle 13 bzw. eine Antriebswelle vorgesehen sein.

Die nachfolgend noch beispielhaft näher beschriebenen Schlageinrichtungen 1 sind jeweils in einer Verschiebe- und Justiereinrichtung 15 justierbar gehalten, um sie an die Lage der Pleuellagerzapfen 5 und der Hauptlagerzapfen 6 und an die Länge der Kurbelwelle 4 anzupassen.

Auch die Abstützung 11 kann verschiebbar eingerichtet sein, wie durch die Doppelpfeile in Figur 1 angedeutet.

In der Figur 1 sind zwei Schlageinrichtungen 1 dargestellt, grundsätzlich kann aber eine beliebige Anzahl von Schlageinrichtungen 1 vorgesehen sein, beispielsweise auch nur eine einzige Schlageinrichtung 1.

Für den Betrieb der Antriebseinrichtung 3, die vorzugsweise einen Elektromotor umfasst, kann eine Lageregelung verwendet werden, um die Kurbelwelle 4 in die jeweilige Schlagposition zu drehen, wonach die Kurbelwelle 4 vorzugsweise schrittweise bzw. getaktet gedreht wird.

Nachdem ein Übergangsradius 8 in gewünschter Weise schlagverfestigt wurde, kann die bzw. können die Schlageinrichtungen 1 an die als nächstes zu verfestigenden Übergangsradien 8 bewegt werden.

In Figur 2 ist in perspektivischer Ansicht ausschnittsweise eine weitere Vorrichtung zur Durchführung des erfindungsgemäßen Verfahrens - allerdings ohne Schlageinrichtung - dargestellt. Die Vorrichtung der Figur 2 ist dabei im Wesentlichen identisch mit der Vorrichtung der Figur 1, weshalb nachfolgend nur auf die wesentlichen Unterschiede im Detail Bezug genommen wird.

Abermals ist eine Antriebseinrichtung 3 vorgesehen. Ferner ist eine Befestigungseinrichtung 9 vorgesehen, die einen Befestigungsflansch 10 und eine daran befestigte Planscheibe mit Spannbacken zur Festlegung der Kurbelwelle 4 aufweist. Die Planscheibe mit den Spannbacken der Befestigungseinrichtung 9 ist an dem Befestigungsflansch 10 verstellbar an einem Ausrichtungsmittel 17 angeordnet, wodurch sich die Längsachse C_{KW} der Kurbelwelle 4 relativ zu der Drehachse C einer Antriebswelle bzw. einer Eingangswelle 13 verschieben lässt.

Die Kurbelwelle 4 der Figur 2 weist eine von der in Figur 1 dargestellten Ausführungsform abweichende Konfiguration auf, umfasst aber grundsätzlich ebenfalls Pleuellagerzapfen 5, Hauptlagerzapfen 6 und Kurbelwangen 7.

In Figur 2 (wie auch in Figur 1) kann an dem von der Antriebseinrichtung 3 abgewandten Ende der Kurbelwelle 4 eine weitere Befestigungseinrichtung 9 vorgesehen sein, diese kann jedoch auch entfallen.

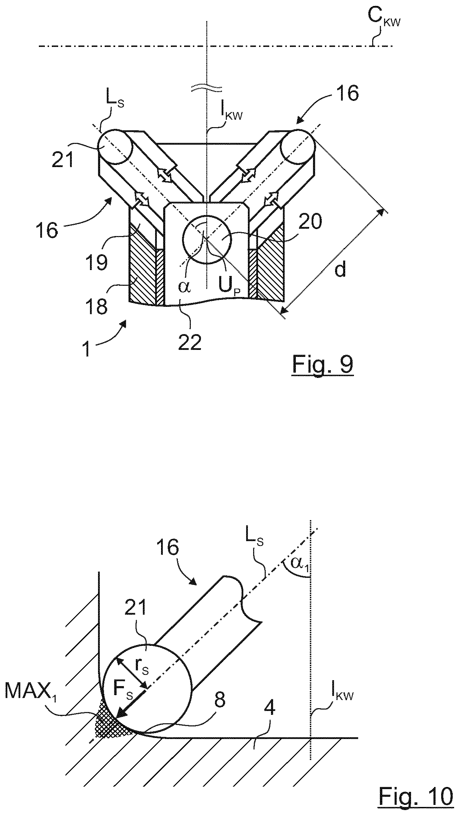

In Figur 3 ist beispielhaft eine Schlageinrichtung 1 der Figur 1 näher dargestellt. Die Erfindung kann grundsätzlich mit einer beliebigen Schlageinrichtung 1 umgesetzt werden. Die nachfolgend beschriebene Schlageinrichtung 1 eignet sich jedoch besonders. Sie weist einen Grundkörper 18 auf, der entsprechend dem Radius des zu bearbeitenden Kurbelwellensegments mit einer prismatischen Anlage versehen sein kann und vorzugsweise Führungen 19 aufweist, die zwei Schlagwerkzeuge 16 in deren Abstützebene führen und ihnen im Abstützwinkel bzw. Schlagwinkel α (vgl. Figuren 9 bis 11) um eine Umlenkeinheit 20 eine entsprechende Freiheit geben, die zur Anpassung an die maßlichen Verhältnisse der Kurbelwelle 4 vorteilhaft ist. An den vorderen Enden der beiden Schlagwerkzeuge 16 ist jeweils eine Kugel als Schlagkopf 21 angeordnet. Ein Zwischenteil 22 stellt die Verbindung zwischen einem Schlagkolben 23 und der Umlenkeinheit 20, die die Schlagenergie an die Schlagwerkzeuge 16 weitergibt, her. Das Zwischenteil 22 kann gegebenenfalls auch entfallen.

Erfindungsgemäß ist vorgesehen, dass die Schlageinrichtung 1 mehrere Schlagköpfe 21 aufweist, die demselben Übergangsradius 8 zugeordnet sind.

Hierfür kann vorgesehen sein, dass die Schlageinrichtung 1 wenigstens ein Schlagwerkzeug 16 mit mehreren Schlagköpfen 21 aufweist. In der Schnittdarstellung der Figur 3 ist darstellungsbedingt für den jeweiligen Übergangsradius 8 jeweils nur ein Schlagkopf 21 zeichnerisch dargestellt. Dennoch können in der Variante der Figur 3 für einen oder für beide Übergangsradien 8 mehrere, beispielsweise hintereinander versetzte, Schlagköpfe 21 angeordnet sein. Insbesondere kann damit bei der Schlageinrichtung 1 der Figur 3 mit den zwei Schlagwerkzeugen 16 also auch nur eines der beiden Schlagwerkzeuge 16 mehrere Schlagköpfe 21 aufweisen, die demselben Übergangsradius 8 zugeordnet sind.

Es kann im Sinne der Erfindung auch vorgesehen sein, dass die Schlageinrichtung 1 mehrere Schlagwerkzeuge 16 aufweist, wobei wenigstens zwei Schlagwerkzeuge 16 jeweils einen oder mehrere Schlagköpfe 21 aufweisen, die demselben Übergangsradius 8 zugeordnet sind. Die einem Übergangsradius 8 zugeordneten Schlagwerkzeuge 16 können dabei jeweils einen oder mehrere Schlagköpfe 21 aufweisen.

Bei der Schlageinrichtung 1 der Figur 3 kann es sich auch um eine Schlageinrichtung handeln, bei der für die Schlagwerkzeuge 16 jeweils nur ein Schlagkopf 21 vorgesehen ist, wenn beispielsweise eine zweite Schlageinrichtung 1 vorgesehen ist (siehe z. B. in Figur 1), die mehrere Schlagköpfe 21 aufweist, die demselben Übergangsradius 8 zugeordnet sind.

Es können auch mehrere Schlageinrichtungen 1 vorgesehen sein, wobei wenigstens zwei Schlagköpfe 21 der Schlageinrichtungen 1 demselben Übergangsradius 8 zugeordnet sind.

Zur Steigerung der Wirksamkeit des Schlages kann auf der von dem Grundkörper 18 abgewandten Seite des Zapfens 5, 6 ein Spannprisma 24 über Federn 25 mit einstellbaren Spannbolzen 26 mit Spannmuttern 27 befestigt werden. Hier sind auch andere konstruktive Lösungen möglich.

Durch Anordnung mehrerer Schlageinrichtungen 1 über die Länge der zu bearbeitenden Kurbelwelle 4 können im Bedarfsfall alle zentrisch und gegebenenfalls exzentrisch verlaufenden Bereiche der Kurbelwelle 4 gleichzeitig bearbeitet werden. Wie bereits erwähnt, müssen in diesem Fall nicht alle Schlageinrichtungen 1 mehrere erfindungsgemäß zugeordnete Schlagköpfe 21 aufweisen.

Der Schlagkolben 23 überträgt über die Umlenkeinheit 20 einen Kraftstoß auf die Schlagwerkzeuge 16, wonach die Schlagköpfe 21 der Schlagwerkzeuge 16 die Schlagkraft F_{S} in die Übergangsradien 8 einbringen.

Der Ausdruck "F_{S}" und vergleichbare Ausdrücke in der vorliegenden Beschreibung sind nur als Platzhalter/Variablen für eine beliebige, dem Fachmann als angebracht erscheinende Schlagkraft zu verstehen. Wenn dabei in der Beschreibung auf "die Schlagkraft F_{S}" Bezug genommen wird, kann es sich somit jeweils um unterschiedliche oder aber auch um identische Schlagkräfte handeln.

Aus der Figur 4 ist eine Schlageinrichtung 1 ersichtlich, die mit nur einem Schlagwerkzeug 16 versehen ist. In dem gezeigten Ausführungsbeispiel ist die Schlageinrichtung 1 zur Kurbelwelle 4 vorzugsweise schräg gestellt, und zwar derart, dass das Schlagwerkzeug 16, dessen Längsachse L_{S} koaxial zur Längsachse der Schlageinrichtung 1 angeordnet ist, senkrecht auf den Bereich des zu bearbeitenden Kurbelwellensegments, vorliegend des zu bearbeitenden Übergangsradius 8, auftrifft. In diesem Fall lässt sich zwar jeweils nur ein Kurbelwellensegment bearbeiten, aber andererseits ist die konstruktive Ausgestaltung und die Kraftübertragung der Schlageinrichtung 1 hierfür besser und einfacher. Zusätzlich können Bohrungsenden mit diesem Schlagwerkzeug 16 stehend verfestigt werden.

Besonders vorteilhaft erweist sich diese Ausgestaltung für die Anwendung an nicht symmetrischen Kurbelwellensegmenten, wie den Endbereichen und den Ölbohrungsenden der Kurbelwelle 4.

Wie bereits in Figur 3 ist auch bei der Schlageinrichtung 1 der Figur 4 zeichnerisch lediglich ein Schlagkopf 21 dargestellt. Die Schlageinrichtung 1 der Figur 4 kann allerdings eine beliebige Anzahl an Schlagköpfen, beispielsweise zwei Schlagköpfe, drei Schlagköpfe oder vier Schlagköpfe, aufweisen. Ferner können mehrere Schlageinrichtungen 1 und/oder Schlagwerkzeuge 16 in der in Figur 4 dargestellten Art vorgesehen sein, die jeweils einen oder mehrere Schlagköpfe 21 aufweisen und demselben Übergangsradius 8 zugeordnet sind.

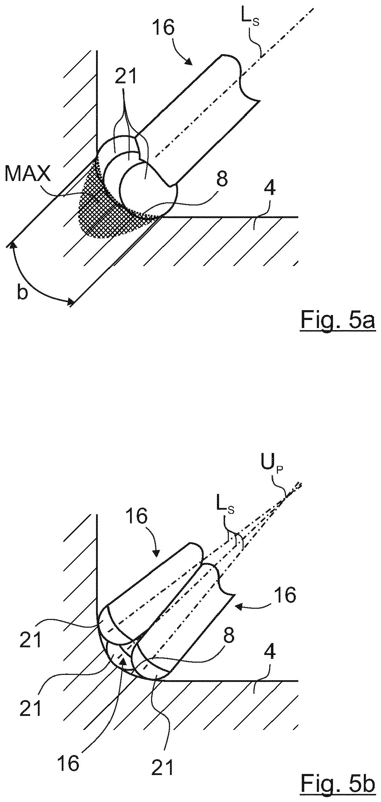

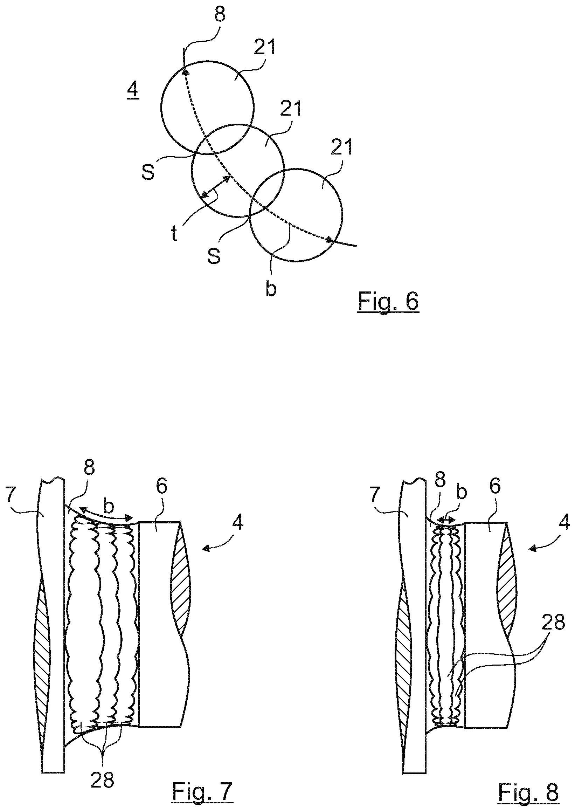

In Figur 5a ist stark schematisiert ein Schlagwerkzeug 16 mit drei Schlagköpfen 21 dargestellt, wobei die Schlagköpfe 21 demselben Übergangsradius 8 zugeordnet sind. Eine hierzu noch vergrößerte und noch weiter schematisierte Darstellung der geometrischen Zusammenhänge (stark übertrieben) zeigt Figur 6.

Die Figuren 5a und 6 zeigen dabei eine Anordnung von drei Schlagköpfen 21, die beim Schlagverfestigen des ringförmig um das beispielhafte Kurbelwellensegment umlaufenden Übergangsradius 8 hintereinander sowie nebeneinander versetzt angeordnet sind. Hierdurch können Druckeigenspannungen entlang des Umfangs des Übergangsradius 8 über einen weiten Bereich bzw. eine große "Breite" b und mit gleichzeitig hoher Tiefenwirkung eingebracht werden (in Figur 5a durch den schraffierten Bereich MAX gekennzeichnet).

Die Schlagköpfe 21 sind dabei derart angeordnet, dass die Schlagköpfe 21 beim Schlagverfestigen des ringförmig um das dargestellte Kurbelwellensegment umlaufenden Übergangsradius 8 jeweils eigene Spuren von Schlageindrücken 28 (vgl. Figur 7) erzeugen.

Die Schlagköpfe 21 können vorzugsweise derart hintereinander versetzt und/oder nebeneinander versetzt angeordnet sein, dass sich die Spuren der Schlageindrücke 28 überlappen.

Wie bereits zuvor angedeutet, können die Schlagköpfe 21 zum Schlagverfestigen eine kugelförmige Oberfläche aufweisen bzw. im Wesentlichen kugelförmig ausgebildet sein.

Wenn vorgesehen ist, dass sich die Spuren von Schlageindrücken 28 der Schlagköpfe 21 überlappen, ist eine Anordnung, die in Figur 6 übertrieben dargestellt ist, vorteilhaft. Dabei sind die Schlagköpfe 21 derart versetzt zueinander angeordnet, dass sich eine Überlappung der Geometrie der Schlagköpfe 21 in Umfangsrichtung des Übergangsradius 8 im Schnitt betrachtet innerhalb der Kurbelwelle 4 befindet. Im Beispiel der Figur 6 mit den Schlagköpfen 21 mit der kugelförmigen Oberfläche sind somit die Schnittpunkte S der jeweiligen Kreisumfänge innerhalb des Übergangsradius 8, d. h. innerhalb der Kurbelwelle 4 angeordnet. Dabei ist die (übertrieben dargestellte) Eindringtiefe t der Schlagköpfe 21 bei der Schlagverfestigung zu berücksichtigen.

Wie vorstehend erwähnt können auch mehrere Schlagwerkzeuge 16 mit jeweils einem oder mehreren Schlagköpfen 21 vorgesehen sein, die demselben Übergangsradius 8 zugeordnet sind. Um dies weiter zu verdeutlichen ist eine beispielhafte Variante der Erfindung in Figur 5b dargestellt. Bei der Variante der Figur 5b sind drei Schlagwerkzeuge 16 vorgesehen, die jeweils einen Schlagkopf 21 aufweisen. Somit sind, vergleichbar mit der in Figur 5a gezeigten Ausführungsform, abermals drei Schlagköpfe 21 vorgesehen, die demselben Übergangsradius 8 zugeordnet sind.

Die Schlagwerkzeuge 16 bringen die Schlagkraft F_{S} entlang ihrer jeweiligen Längsachse L_{S} in den Übergangsradius 8 ein. Dabei sind die Schlagwerkzeuge 16 an der Umlenkeinheit 20 (in der Figur 5b ist zur vereinfachten Darstellung nur der Umlenkpunkt U_{P} der Umlenkeinheit dargestellt), angeordnet. Die Schlagwerkzeuge 16 können derart ausgebildet und zueinander ausgerichtet sein, dass sich die Schlagwerkzeuge beim Einbringen der Schlagkraft F_{S} gegenseitig abstützen, um nicht von ihrer zugeordneten jeweiligen Schlagposition entlang des Umfangs des Übergangsradius 8 abzurutschen. Alternativ und/oder zusätzlich kann die Position des Umlenkpunktes U_{P} von der gezeigten Position abweichen und beispielsweise näher an dem Übergangsradius 8 angeordnet sein, wodurch sich für die äußeren Schlagwerkzeuge 16 ein veränderter Schlagwinkel α ergibt, was ebenfalls ein Abrutschen verhindern kann. Grundsätzlich ist die Darstellung der Figur 5b, insbesondere bezüglich der Größenverhältnisse und Winkelausrichtungen, ohnehin nur schematisch zu verstehen.

Die Schlagwerkzeuge 16 sind übereinanderliegend bzw. überlappend angeordnet und können hierzu besonders flach ausgebildet sein, um den relativ engen geometrischen Erfordernissen gerecht zu werden. In der in Figur 5b gezeigten Variante ist ein entlang des Umfangs des Übergangsradius 8 mittig angeordnetes Schlagwerkzeug 16 hinter den beiden anderen Schlagwerkzeugen 16 versetzt, wodurch eine noch engere Anordnung der Schlagwerkzeuge 16 und somit der Schlagköpfe 21 erreicht werden kann. Es kann grundsätzlich aber ein beliebiger Versatz der Schlagwerkzeuge 16 zueinander vorgesehen sein.

In Figur 7 ist ein beispielhafter Übergangsradius 8 zwischen einem Hauptlagerzapfen 6 und einer Kurbelwange 7 dargestellt, bei dem sich die Schlageindrücke 28, die durch jeweilige Schlagköpfe 21 erzeugt wurden, entlang des ringförmig um den Hauptlagerzapfen 6 verlaufenden Übergangsradius 8 überlappen. Dabei dringt der jeweilige Schlagkopf 21 bei einem nachfolgenden Schlag zumindest teilweise in den Schlageindruck 28 des vorhergehenden Schlages ein, wodurch sich die in der Figur 7 und den nachfolgenden Figuren dargestellte "Spur" aus Schlageindrücken 28 ergibt. Das charakteristische Verfestigungsmuster bzw. die sich überlappenden Spuren der Schlageindrücke 28 können beispielsweise durch eine Anordnung mit hintereinander und nebeneinander versetzten Schlagköpfen 21, wie in Figur 5a oder 5b dargestellt, erreicht werden. Die Druckeigenspannungen werden somit über eine große Breite b entlang des Umfangs des Übergangsradius 8 in die Kurbelwelle 4 eingebracht.

In Figur 8 ist ein weiterer beispielhafter Übergangsradius 8 dargestellt, der zwei ineinander liegende Spuren von Schlageindrücken 28 zeigt. Ein derartiges Muster kann beispielsweise dadurch erzielt werden, dass zwei Schlagköpfe 21 derart hintereinander angeordnet sind, dass die Schlagköpfe 21 beim Schlagverfestigen des ringförmig um den Hauptlagerzapfen 6 umlaufenden Übergangsradius 8 jeweils Schlageindrücke 28 erzeugen. Dabei ist der die innenliegende Spur der Schlageindrücke 28 erzeugende Schlagkopf 21 kleiner ausgebildet als der die äußere Spur von Schlageindrücken 28 erzeugende Schlagkopf 21.

Es kann also vorgesehen sein, dass die Schlagköpfe 21 unterschiedliche Größen aufweisen. Die Schlagköpfe 21 können auch gleich groß sein. Ferner kann auch vorgesehen sein, dass der zweite Schlagkopf 21, d. h. der Schlagkopf 21, der in den bereits vom ersten Schlagkopf 21 erzeugten Schlageindruck 28 einschlägt, größer ist.

Durch eine Schlagverfestigung in der Art der Figur 8 können beispielsweise Druckeigenspannungen mit bisher unerreichter Tiefe in die Kurbelwelle 4 eingebracht werden.

Bei einer besonderen Variante der Erfindung kann vorgesehen sein, dass der Abstand d (vgl. Figur 9) zwischen einem Umlenkpunkt U_{P} der Umlenkeinheit 20 und dem vorderen Ende des jeweiligen Schlagkopfes 21 bzw. der jeweiligen Schlagköpfe 21 der Schlagwerkzeuge 16 einstellbar ist.

In Figur 3 ist eine mögliche technische Lösung zur Einstellung des Abstands d schematisiert strichliniert dargestellt, bei der eine Wechseleinrichtung 30 mit einem Magazin vorgesehen ist, um das wenigstens eine Schlagwerkzeug 16 und/oder den wenigstens einen Schlagkopf 21 und/oder die Umlenkeinheit 20 und/oder die wenigstens eine Schlageinrichtung 1 auszutauschen, um den Abstand d zwischen dem Umlenkpunkt U_{P} der Umlenkeinheit 20 und dem vorderen Ende eines oder mehrerer Schlagköpfe 21 des wenigstens einen Schlagwerkzeugs 16 auf einen anderen Wert einzustellen. In Figur 3 wird insbesondere eine Wechseleinrichtung 30 zum Austauschen von Schlagwerkzeugen 16 angedeutet. Die Wechseleinrichtung 30 umfasst hierfür eine Auswahl von Schlagwerkzeugen 16 mit jeweils unterschiedlicher Länge. Durch einen Austausch eines Schlagwerkzeugs 16 kann somit der Abstand d und somit der Schlagwinkel α eingestellt werden.

Es kann auch vorgesehen sein, dass die Länge der Schlagwerkzeuge 16 einstellbar, vorzugsweise teleskopierbar ist. Ein entsprechender Aufbau ist in Figur 9 dargestellt. Figur 9 zeigt dabei einen Ausschnitt einer Schlageinrichtung 1, die im Wesentlichen identisch ausgebildet sein kann, wie in der Ausführungsform der Figur 3.

In Figur 9 sind zwei teleskopierbare Schlagwerkzeuge 16 schematisch dargestellt. Durch die einstellbare Länge der Schlagwerkzeuge 16 ist der Abstand d zwischen dem Umlenkpunkt U_{P} der Umlenkeinheit 20 und dem vorderen Ende eines Schlagkopfes 21 einstellbar. Hierdurch lässt sich also mittelbar auch der Schlagwinkel α und gegebenenfalls auch die Schlagposition beeinflussen.

Es kann auch, wie in Figur 1 dargestellt, vorgesehen sein, mehrere Schlageinrichtungen 1 einzusetzen. Vorzugsweise ist dann der jeweilige Abstand d zwischen dem Umlenkpunkt U_{P} und den Schlagköpfen 21 wenigstens bei zwei Schlageinrichtungen 1 nicht identisch. Dies ermöglicht es, die Schlageinrichtungen 1 jeweils zur Schlagverfestigung eines Übergangsradius 8 oder einer Gruppe von Übergangsradien 8 einzusetzen, wobei die Schlagwerkzeuge 16 der Schlageinrichtung 1 jeweils bereits auf den vorzugsweise vorgesehenen Schlagwinkel α eingestellt sind. Ein Umrüsten der Schlageinrichtung 1 ist somit nicht notwendig. Insofern die Kurbelwelle 4 nur Übergangsradien 8 mit zwei verschiedenen vorteilhaften Schlagwinkeln α aufweist, genügen daher vorzugsweise zwei entsprechend voreingestellte Schlageinrichtungen 1.

Es kann z. B. vorgesehen sein, dass eine erste Schlageinrichtung 1 Schlagkräfte F_{S} unter einem ersten Schlagwinkel α₁ und eine zweite Schlageinrichtung 1 Schlagkräfte F_{S} unter einem zweiten Schlagwinkel α₂ einbringt. Es können auch Schlageinrichtungen 1 eingesetzt werden, bei denen der Abstand d bzw. der Schlagwinkel α auf unterschiedliche Weise einstellbar ist. Es kann auch eine herkömmliche Schlageinrichtung mit einer Schlageinrichtung 1 mit einstellbarem Abstand kombiniert werden. Im Rahmen der Erfindung sind beliebige Kombinationen, auch mit einer Schlageinrichtung 1 mit mehreren Schlagköpfen 21, die demselben Übergangsradius 8 zugeordnet sind, denkbar.

Es kann vorgesehen sein, dass der Schlagwinkel α zwischen der Längsachse L_{S} des wenigstens einen Schlagwerkzeugs 16 und einem Lot I_{KW} zu der Längsachse C_{KW} der Kurbelwelle 45° bis 80°, vorzugsweise 10° bis 70°, weiter bevorzugt 20° bis 60° und besonders bevorzugt 30° bis 55°, insbesondere 35° bis 50°, beträgt.

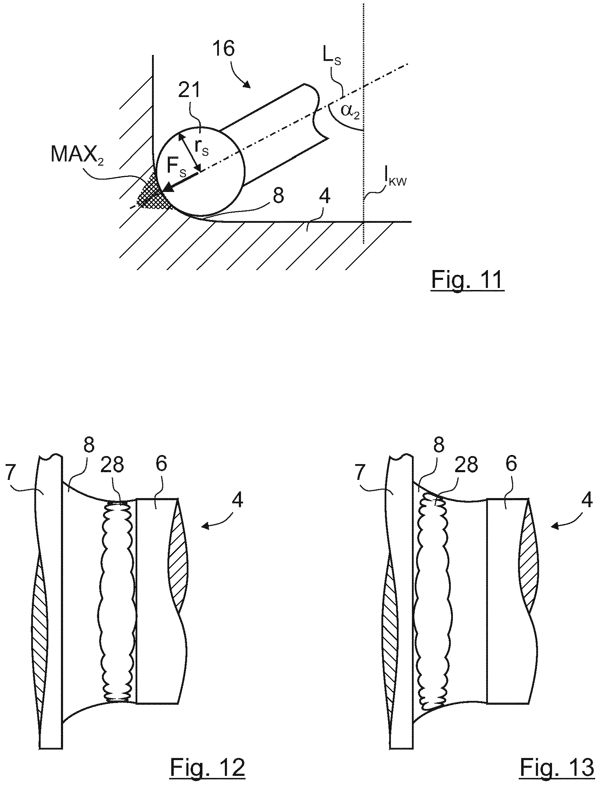

Zur Verdeutlichung der Zusammenhänge sind in den Figuren 10 und 11 Vergrößerungen dargestellt, die stark schematisiert einen Schlagkopf 21 eines Schlagwerkzeugs 16 und einen beispielhaften Übergangsradius 8 einer Kurbelwelle 4 darstellen. Selbstverständlich gelten alle Zusammenhänge auch, wenn mehrere Schlagköpfe 21 vorgesehen sind. Dabei wird im Beispiel der Figur 10 unter einem ersten Schlagwinkel α₁ und in der Figur 11 unter einem zweiten Schlagwinkel α₂ schlagverfestigt.

Durch die entsprechende Einstellung des Schlagwinkels α über die Veränderung des Abstands d zwischen dem Umlenkpunkt U_{P} der Umlenkeinheit 20 und dem wenigstens einen Schlagkopf 21 des Schlagwerkzeugs 16 lässt sich die Richtung der Schlagkraft F_{S} vorgeben, wodurch der Bereich größter Wirksamkeit der Schlagverfestigung gezielt einstellbar ist.

Es kann auch vorgesehen sein die Schlagkraft F_{S} gezielt zu reduzieren bzw. die Wirkrichtung zu verändern, wenn z. B. reduzierte Querschnitte, Bohrungen oder andere geometrische Verhältnisse dies erfordern.

Vorzugsweise wird der Schlagwinkel α entsprechend dem Verlauf eines Beanspruchungsmaximums MAX₁, MAX₂ des Übergangsradius 8 gewählt, wonach der Verlauf des Beanspruchungsmaximums MAX₁, MAX₂ auf Basis von Simulationen und/oder Berechnungen und/oder Versuchsreihen des jeweiligen Kurbelwellentyps bestimmt wird.

In Figur 11 ist der Schlagkopf 21 an derselben Position des Übergangsradius 8 positioniert wie bei Figur 10. Allerdings ist der Abstand d zwischen dem Umlenkpunkt U_{P} der Umlenkeinheit 20 und dem Schlagkopf 21 derart eingestellt, dass das Schlagwerkzeug 16 in einem anderen Schlagwinkel α ausgerichtet ist wie in Figur 10. Dadurch ergibt sich, dass der Schlag im Winkel α₂ in den Übergangsradius 8 eingebracht wird, obwohl der Schlagkopf 21 grundsätzlich an der gleichen Position wie in Figur 10 angesetzt ist.

Die Darstellung in Figur 11 weicht zur Verdeutlichung besonders stark von der Darstellung in der Figur 10 ab.

Grundsätzlich kann auch die Positionierung des Schlagkopfes 21 in dem Übergangsradius 8 verändert werden, d. h. der Schlagkopf 21 könnte ggf. auch an einer abweichenden Position entlang des Umfangs des Übergangsradius 8 ansetzen, wobei gleichzeitig der Schlagwinkel α veränderbar sein kann.

Wie bereits erwähnt, kann der bzw. können die Schlagköpfe 21 unterschiedliche Größen aufweisen. Insbesondere wenn an einem Schlagwerkzeug 16 nur ein Schlagkopf 21 vorgesehen ist, kann der Schlagkopf 21 einen Radius r_{S} aufweisen, dessen Größe 75% bis 99% des Übergangsradius 8, vorzugsweise 85% bis 98% des Übergangsradius 8 und besonders bevorzugt 85% bis 95% des Übergangsradius 8 beträgt. Vorzugsweise entspricht der Radius r_{S} des Schlagkopfes 21 dem Übergangsradius 8 im Wesentlichen.

Grundsätzlich können die Schlagköpfe 21 beliebige Größen aufweisen. Wenn an einem Schlagwerkzeug 16 mehrere Schlagköpfe 21 vorgesehen sind, können die Schlagköpfe 21 beispielsweise größer sein als 10%, 20%, 30%, 40%, 50%, 60%, 70%, 80% oder 90% des Übergangsradius 8. Die Größe eines Schlagkopfes 21 kann aber auch kleiner sein als 10% der Größe des Übergangsradius 8 oder der Größe des Übergangsradius 8 entsprechen.

In den Figuren 12 und 13 sind beispielhafte Übergangsradien 8 zwischen einem Hauptlagerzapfen 6 und einer Kurbelwange 7 dargestellt, bei denen die Schlagverfestigung unter verschiedenen Schlagwinkeln α erfolgt ist und bei denen sich die Schlageindrücke 28 eines Schlagkopfes 21 des Schlagwerkzeugs 16 entlang des ringförmig um einen Hauptlagerzapfen 6 umlaufenden Übergangsradius 8 überlappen. Wie vorstehend bereits erwähnt, kann der Schlagkopf 21 bei einem nachfolgenden Schlag zumindest teilweise in den Schlageindruck 28 des vorhergehenden Schlages eindringen, wodurch die in den Figuren dargestellte Spur aus Schlageindrücken 28 entsteht.

In den Figuren 12 und 13 verlaufen die Schlageindrücke 28 zur bildlichen Darstellung deutlich erkennbar auf dem Umfang des Übergangsradius 8 versetzt voneinander. Tatsächlich ist die Abweichung vorzugsweise nur gering, aber gleichwohl wirksam. Der versetzte Verlauf kann durch einen geänderten Schlagwinkel a, wie in Figur 11 dargestellt und/oder durch einen geänderten Ansatzpunkt des Schlagkopfes 21 erreicht werden. Bei dem Übergangsradius 8 der Figur 12 wurde ein kleinerer Schlagwinkel α gewählt, als bei dem Übergangsradius 8 der Figur 13, d. h. der Abstand d zwischen dem Umlenkpunkt U_{P} der Umlenkeinheit 20 und dem Schlagkopf 21 des Schlagwerkzeugs 16 war bei dem Verfahren gemäß Figur 12 größer eingestellt, als bei dem Übergangsradius 8 der Figur 13. Demnach verlaufen die Schlageindrücke 28 bei dem in Figur 13 dargestellten Übergangsradius 8 weiter oben bzw. näher an der Kurbelwange 7 als dies bei dem Übergangsradius 8 der Figur 12 der Fall ist.

Die in den Figuren 12 und 13 dargestellten Spuren von Schlageindrücken 28 sind in den Ausführungsbeispielen durch die (hier nicht näher dargestellte) Verwendung von jeweils mehreren Schlagköpfen 21 entstanden. Im Sinne der Erfindung kann sogar vorgesehen sein, dass eine Schlageinrichtung 1 mehrere Schlagwerkzeuge 16, beispielsweise zwei Schlagwerkzeuge 16, mit jeweils einem Schlagkopf 21 aufweist, die demselben Übergangsradius 8 zugeordnet sind, wobei der jeweilige Schlagwinkel α der Schlagwerkzeuge 16 unterschiedlich eingestellt ist. Es können dann beispielsweise auch Spuren von Schlageindrücken 28 ausgebildet werden, die parallel zueinander verlaufen (überlappend oder nicht überlappend).

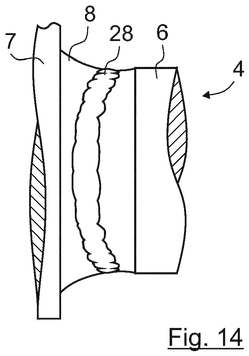

Es kann auch vorgesehen sein, dass der Schlagwinkel α eines Schlagwerkzeugs 16 während der Schlagverfestigung eines Übergangsradius 8 entlang des ringförmig um den Pleuellagerzapfen 5 und/oder Hauptlagerzapfen 6 umlaufenden jeweiligen Übergangsradius 8 verändert wird. Dies ist in Figur 14 dargestellt und kann selbstverständlich auch dann vorgesehen sein, wenn dem Übergangsradius 8 mehrere Schlagköpfe 21 zugeordnet sind.

Es kann vorgesehen sein, dass alle Übergangsradien 8 zwischen Pleuellagerzapfen 5 und den Kurbelwangen 7 mit einem ersten Schlagwinkel α und alle Übergangsradien 8 zwischen den Hauptlagerzapfen 6 und den Kurbelwangen 7 unter einem zweiten Schlagwinkel α schlagverfestigt werden.

Alternativ kann vorgesehen sein, dass wenigstens zwei Übergangsradien 8 zwischen den Pleuellagerzapfen 5 und den Kurbelwangen 7 unter einem unterschiedlichen Schlagwinkel α schlagverfestigt werden und/oder dass wenigstens zwei Übergangsradien 8 zwischen den Hauptlagerzapfen 6 und den Kurbelwangen 7 unter einem unterschiedlichen Schlagwinkel α schlagverfestigt werden und/oder dass wenigstens ein Übergangsradius 8 zwischen dem Pleuellagerzapfen 5 und den Kurbelwangen 7 unter einem anderen Schlagwinkel α schlagverfestigt wird als ein Übergangsradius 8 zwischen den Hauptlagerzapfen 6 und den Kurbelwangen 7.

## Patentansprüche

1. Vorrichtung zum Schlagverfestigen von Übergangsradien (8) einer Kurbelwelle (4), insbesondere von Übergangsradien (8) zwischen Pleuellagerzapfen (5) und Kurbelwangen (7) und/oder Übergangsradien (8) zwischen Hauptlagerzapfen (6) und den Kurbelwangen (7) der Kurbelwelle (4), umfassend wenigstens eine Schlageinrichtung (1), um eine Schlagkraft (F_{S}) in wenigstens einen Übergangsradius (8) einzubringen,
**dadurch gekennzeichnet, dass** die Schlageinrichtung (1) mehrere Schlagwerkzeuge (16) aufweist, wobei die Schlagköpfe (21) wenigstens zweier Schlagwerkzeuge (16) demselben Übergangsradius (8) zugeordnet sind und/oder, dass die Schlageinrichtung (1) wenigstens ein Schlagwerkzeug (16) mit mehreren Schlagköpfen (21), die demselben Übergangsradius (8) zugeordnet sind, aufweist.

2. Vorrichtung nach Anspruch 1,
**dadurch gekennzeichnet, dass**
die Schlageinrichtung (1) einen Schlagkolben (23) und eine Umlenkeinheit (20) aufweist, wobei das wenigstens eine Schlagwerkzeug (16) an der Umlenkeinheit (20) angeordnet ist, und wobei der Schlagkolben (23) über die Umlenkeinheit (20) einen Kraftstoß auf das wenigstens eine Schlagwerkzeug (16) überträgt und der oder die Schlagköpfe (21) des wenigstens einen Schlagwerkzeugs (16) die Schlagkraft (F_{S}) in den zugeordneten Übergangsradius (8) einbringt bzw. einbringen.

3. Vorrichtung nach Anspruch 1 oder 2,
**dadurch gekennzeichnet, dass**
die Schlagköpfe (21) derart angeordnet sind, dass die Schlagköpfe (21) beim Schlagverfestigen eines ringförmig um den Pleuellagerzapfen (5) und/oder den Hauptlagerzapfen (6) umlaufenden Übergangsradius (8) hintereinander versetzt und/oder nebeneinander versetzt angeordnet sind.

4. Vorrichtung nach einem der Ansprüche 1 bis 3,
**dadurch gekennzeichnet, dass**
wenigstens zwei Schlagköpfe (21), vorzugsweise alle demselben Übergangsradius (8) zugeordneten Schlagköpfe (21), derart angeordnet sind, dass die Schlagköpfe (21) beim Schlagverfestigen eines ringförmig um den Pleuellagerzapfen (5) und/oder den Hauptlagerzapfen (6) umlaufenden Übergangsradius (8) jeweils eigene Spuren von Schlageindrücken (28) erzeugen.

5. Vorrichtung nach Anspruch 4,
**dadurch gekennzeichnet, dass**
sich die Spuren der Schlageindrücke (28) überlappen.

6. Vorrichtung nach einem der Ansprüche 1 bis 5,
**dadurch gekennzeichnet, dass**
wenigstens zwei Schlagköpfe (21), vorzugsweise alle demselben Übergangsradius (8) zugeordneten Schlagköpfe (21), derart angeordnet sind, dass die Schlagköpfe (21) beim Schlagverfestigen eines ringförmig um den Pleuellagerzapfen (5) und/oder den Hauptlagerzapfen (6) umlaufenden Übergangsradius (8) jeweils ineinander liegende Spuren von Schlageindrücken (28) erzeugen.

7. Vorrichtung nach einem der Ansprüche 1 bis 6,
**dadurch gekennzeichnet, dass**
die Schlagköpfe (21) zum Schlagverfestigen eine kugelförmige Oberfläche aufweisen.

8. Vorrichtung nach einem der Ansprüche 1 bis 7,
**dadurch gekennzeichnet, dass**
die Schlagköpfe (21) unterschiedliche Größen aufweisen.

9. Vorrichtung nach einem der Ansprüche 2 bis 8,
**dadurch gekennzeichnet, dass**
die Vorrichtung eingerichtet ist, um den Abstand (d) zwischen einem Umlenkpunkt (U_{P}) der Umlenkeinheit (20) und dem vorderen Ende des einen Schlagkopfes (21) oder der mehreren Schlagköpfe (21) des wenigstens einen Schlagwerkzeugs (16) einzustellen.

10. Verfahren zum Schlagverfestigen von Übergangsradien (8) einer Kurbelwelle (4), insbesondere von Übergangsradien (8) zwischen Pleuellagerzapfen (5) und Kurbelwangen (7) und/oder Übergangsradien (8) zwischen Hauptlagerzapfen (6) und den Kurbelwangen (7) der Kurbelwelle (8) mit einer Vorrichtung gemäß einem der Ansprüche 1 bis 9.

## Claims

1. An apparatus for the impact-hardening of transition radii (8) of a crankshaft (4), in particular of transition radii (8) between connecting-rod bearing journals (5) and crank webs (7) and/or transition radii (8) between main bearing journals (6) and the crank webs (7) of the crankshaft (4), comprising at least one impact device (1) for introducing an impact force (Fs) into at least one transition radius (8),
**characterized in that**
the impact device (1) has multiple impact tools (16), wherein the impact heads (21) of at least two impact tools (16) are assigned to the same transition radius (8) and/or that the impact device (1) has at least one impact tool (16) with multiple impact heads (21) which are assigned to the same transition radius (8).

2. The apparatus as claimed in claim 1,
**characterized in that**
the impact device (1) has an impact piston (23) and a deflecting unit (20), wherein the at least one impact tool (16) is arranged at the deflecting unit (20), and wherein the impact piston (23) transmits an impulse to the at least one impact tool (16) via the deflecting unit (20), and the one or more impact heads (21) of the at least one impact tool (16) introduce(s) the impact force (Fs) into the associated transition radius (8).

3. The apparatus as claimed in claim 1 or 2,
**characterized in that**
the impact heads (21) are arranged such that the impact heads (21) are arranged offset one behind the other and/or offset adjacent to one another during the impact hardening of a transition radius (8) running in annularly encircling fashion around the connecting-rod bearing journal (5) and/or the main bearing journal (6).

4. The apparatus as claimed in any of claims 1 to 3,
**characterized in that**
at least two impact heads (21), preferably all impact heads (21) assigned to the same transition radius (8), are arranged such that the impact heads (21) each generate their own tracks of impact impressions (28) during the impact hardening of a transition radius (8) running in annularly encircling fashion around the connecting-rod bearing journal (5) and/or the main bearing journal (6).

5. The apparatus as claimed in claim 4,
**characterized in that**
the tracks of the impact impressions (28) overlap.

6. The apparatus as claimed in any of claims 1 to 5,
**characterized in that**
at least two impact heads (21), preferably all impact heads (21) assigned to the same transition radius (8), are arranged such that the impact heads (21) generate tracks, situated in each case one inside the other, of impact impressions (28) during the impact hardening of a transition radius (8) running in annularly encircling fashion around the connecting-rod bearing journal (5) and/or the main bearing journal (6).

7. The apparatus as claimed in any of claims 1 to 6,
**characterized in that**
the impact heads (21) for the impact hardening have a spherical surface.

8. The apparatus as claimed in any of claims 1 to 7,
**characterized in that**
the impact heads (21) have different sizes.

9. The apparatus as claimed in any of claims 2 to 8,
**characterized in that**
the apparatus is configured to adjust the spacing (d) between a deflection point (U_{P}) of the deflecting unit (20) and the front end of the one impact head (21) or of the multiple impact heads (21) of the at least one impact tool (16).

10. A method for the impact hardening of transition radii (8) of a crankshaft (4), in particular of transition radii (8) between connecting-rod bearing journals (5) and crank webs (7) and/or transition radii (8) between main bearing journals (6) and the crank webs (7) of the crankshaft (4) by means of an apparatus as claimed in any of claims 1 to 9.

## Revendications

1. Dispositif pour le traitement par impact de rayons de transition (8) d'un vilebrequin (4), en particulier de rayons de transition (8) entre des tourillons de palier de bielle (5) et des flasques de vilebrequin (7) et/ou de rayons de transition (8) entre des tourillons de palier principaux (6) et les flasques de vilebrequin (7) du vilebrequin (4), comprenant au moins un dispositif de percussion (1), pour appliquer une force de percussion (Fs) à au moins un rayon de transition (8), **caractérisé en ce qu'**ils
sont associés au même rayon de transition (8), le dispositif de percussion (1) comporte plusieurs outils de percussion (16), dans lequel les têtes de percussion (21) d'au moins deux outils de percussion (16) sont associées au même rayon de transition (8) et/ou **en ce que** le dispositif de percussion (1) comporte au moins un outil de percussion (16) avec plusieurs têtes de percussion (21).

2. Dispositif selon la revendication 1,
**caractérisé en ce que**,
le dispositif de percussion (1) comporte un piston de percussion (23) et une unité de déviation (20), dans lequel ledit au moins un outil de percussion (16) est disposé sur l'unité de déviation (20), et dans lequel le piston de percussion (23) transmet une force d'impact audit au moins un outil de percussion (16) via l'unité de déviation (20) et la ou les têtes de percussion (21) dudit au moins un outil de percussion (16) applique ou appliquent la force de percussion (F_{S}) au rayon de transition correspondant (8).

3. Dispositif selon la revendication 1 ou 2,
**caractérisé en ce que**,
les têtes de percussion (21) sont disposées de telle manière que, lors du traitement par impact d'un rayon de transition (8) courant en anneau autour du tourillon de palier de bielle (5) et/ou du tourillon de palier principal (6), les têtes de percussion (21) sont disposées de manière décalée les unes derrière les autres et/ou de manière décalée les unes à côté des autres.

4. Dispositif selon l'une des revendications 1 à 3,
**caractérisé en ce que**,
au moins deux têtes de percussion (21), de préférence toutes les têtes de percussion (21) affectées au même rayon de transition (8), sont disposées de sorte que, lors du traitement par impact d'un rayon de transition (8) courant en anneau autour du tourillon de palier de bielle (5) et/ou du tourillon de palier principal (6), chaque tête de percussion (21) génère ses propres traces de percussion (28).

5. Dispositif selon la revendication 4,
**caractérisé en ce que**,
les traces de percussion (28) se chevauchent.

6. Dispositif selon l'une des revendications 1 à 5,
**caractérisé en ce que**,
au moins deux têtes de percussion (21), de préférence toutes les têtes de percussion (21) affectées au même rayon de transition (8), sont disposées de sorte que, lors du traitement par impact d'un rayon de transition (8) courant en anneau autour du tourillon de palier de bielle (5) et/ou du tourillon de palier principal (6), les têtes de percussion (21) génèrent des traces de percussion (28) respectivement à l'intérieur les unes des autres.

7. Dispositif selon l'une des revendications 1 à 6,
**caractérisé en ce que**,
les têtes de percussion (21) présentent une surface sphérique pour le traitement par impact.

8. Dispositif selon l'une des revendications 1 à 7,
**caractérisé en ce que**,
les têtes de percussion (21) ont des tailles différentes.

9. Dispositif selon l'une des revendications 2 à 8,
**caractérisé en ce que**,
le dispositif est agencé, pour régler la distance (d) entre un point de déviation (Uₚ) de l'unité de déviation (20) et l'extrémité avant de la tête de percussion (21) ou de plusieurs têtes de percussion (21) dudit au moins un outil de percussion (16).

10. Procédé pour le traitement par impact de rayons de transition (8) d'un vilebrequin (4), en particulier de rayons de transition (8) entre des tourillons de palier de bielle (5) et des flasques de vilebrequin (7) et/ou de rayons de transition (8) entre des tourillons de palier principaux (6) et les flasques de vilebrequin (7) du vilebrequin (4) au moyen d'un dispositif selon l'une des revendications 1 à 9.
